# EUROPEAN PATENT APPLICATION

(11) **EP 2 579 476 A1**
(43) Date of publication of application: **10.04.2013**
(21) Application number: 11785995.9
(22) Date of filing: 16.03.2011
(51) Int. Cl.: H04B 7/26

(54) **CONTROL METHOD OF COMPRESSED MODE AND SYSTEM THEREOF**

(30) Priority: 27.05.2010 CN 201010187421
(71) Applicant: ZTE Corporation, Shenzhen, Guangdong 518057 (CN)
(72) Inventor: KE, Yazhu, Shenzhen Guangdong 518057 (CN); CHENG, Xiang, Shenzhen Guangdong 518057 (CN); LIU, Lin, Shenzhen Guangdong 518057 (CN)
(74) Representative: Hoyle, Benjamin James
(86) International application number: PCT/CN2011/071885
(87) International publication number: WO 2011/147223

(57) **Abstract**

A control method of compressed mode is provided in the invention, including: when a terminal needs inter-frequency or inter-system measurement, a radio network controller notifies node B to start compressed mode, the node B further orders the terminal to start the compressed mode; after receiving the order from the node B, the terminal returns acknowledgement information to node B; the terminal and node B generate the plurality of transmission gaps, and the terminal performs measurement in the plurality of transmission gaps. A control system of compressed mode is correspondingly provided. This soulution resolves the controlling problem of the compressed mode triggered by the mechanism of load balancing in case of inter-frequency or inter-system switching, thus reducing the load of current serving cell, and ensuring stability of the terminal service in the cell.

## Description

### Field of the Invention

The present invention relates to the radio communication technology, and particularly to a control method of compressed mode and system thereof.

### Background of the Invention

The radio network technology has evolved from the second generation Global System Mobile (GSM) to the third generation Wideband Code Division Multiple Access (WCDMA) system, then to the third generation Enhanced Universal Radio Access (E-UTRA) system. As a result, multiple systems coexist in the network deployment of the operators according to the users' demands. At present, the operators' radio network function is usually defined as: the second generation GSM system is mainly used for carrying the voice, the third generation WCDMA system is mainly used for carrying Packet Switched (PS) domain service, conversation service and video service, and the third generation E-UTRAN system is mainly used for carrying super-speed PS domain service.

Therefore, according to the current network deployment, the mobility between the second generation GSM system and the third generation WCDMA system is very important. And, in the near future, the mobility management of the third generation E-UTRA system, for example switching to the hot spot area of the E-UTRA system, will become important.

The switching processes due to the mobility management of the above systems all require the measurement for the target system and the target carrier in the prior switching preparation stage, so as to make an accurate switching strategy.

The compressed mode plays an important role in the inter-carrier measurement and inter-system measurement. When the compressed mode is adopted, the terminal can measure non-service carriers and the carriers of other systems without being configured with dual receivers. When the terminal configured with only one receiver moves from the area covered by the third generation WCDMA system to the area covered by the second generation GSM system, it can only adopt the compressed mode to perform the inter-system measurement. Similarly, the compressed mode can also be used for the terminal to move into and move out of the area covered by the third generation WCDMA multi-carrier system. In summary, in the compressed mode, the terminal can perform measurement of another non-service carrier without losing any data transmitting on the service carrier.

The compressed mode is defined as a transmission mode through which the data transmitted will be compressed in time domain to generate a transmission gap. The receiver of the terminal can tune to another carrier to perform measurement using this transmission gap. A transmission gap is generally described and determined by transmission gap pattern sequences. Every set of transmission gap pattern sequences is uniquely identified by a transmission gap pattern sequence identifier, which can be used for only one transmission gap pattern sequence measurement. That is, it is used for one of: Frequency-Division Duplex measurement, Time-Division Duplex measurement, GSM Carrier Received Signal Strength Indication (RSSI) measurement, initial identification of GSM Base Station Identification Code (BSIC), acknowledgement of GSM Base Station Identification Code (BSIC), multi-carrier-frequency measurement, E-UTRA measurement and so on.

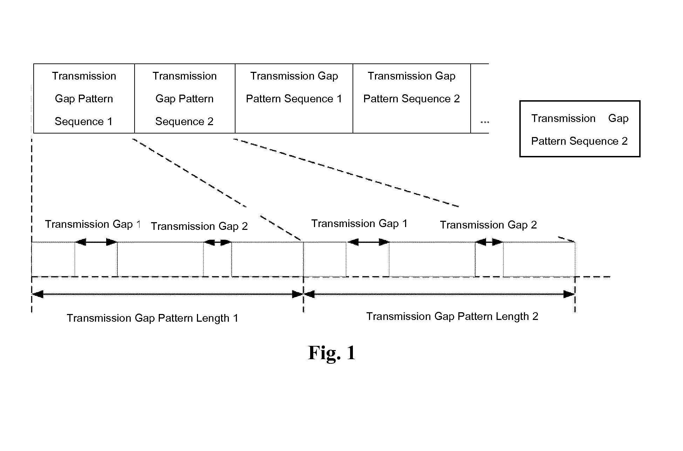

Fig. 1 is a schematic diagram of a transmission gap pattern sequence structure. As shown in Fig. 1, the transmission gap pattern sequence includes two alternate transmission gap patterns, where are Transmission Gap Pattern Sequence 1 and Transmission Gap Pattern Sequence 2 respectively. Each transmission gap pattern sequence provides one or two transmission gaps in the length of one transmission gap pattern. In addition, every set of the transmission gap pattern sequence also includes the transmission gap Connection Frame Number (CFN) which indicates the start/stop time of the compressed mode, repetition times of the transmission gap pattern sequence and so on. These parameters are all determined according to the measurement usage of the transmission gap pattern sequence.

Speeding up the switching process can increase the switching reliability, especially in the area where the wireless signal quality is deteriorating rapidly. Thus, it can reduce the risk of the user's call drop by speeding up switching process. Hence, in order to improve the system capacity and user throughput, the later the compressed mode starts, the better it is; and the shorter the compressed mode lasts, the better it is. In the related art, it is generally the terminal that controls the start and stop of the compressed mode. For example, when the terminal judges that the wireless signal quality in the current serving cell is poor and it might requires switching to the inter-carrier/inter-system adjacent cell, the terminal starts the compressed mode. When the terminal judges that the wireless signal quality of the current serving cell has got better or the measurement result has been obtained, the terminal stops the compressed mode. Correspondingly, when the terminal determines to start/stop the compressed mode, it will notify the node B of the started/stopped transmission gap pattern sequences.

But, there are the following problems existing in the related control methods of compressed mode:

When a great deal of terminals appear in the same cell, the available resources of the cell may not be enough to ensure the quality of the service of all terminal services, thus causing congestion or overloading. A low-cost method for coping with the congestion or overloading cell is to balance service to the adjacent cell with low load (namely, load balancing mechanism). However, when it is required to perform inter-frequency/inter-system switching due to overload of the current serving cell, the wireless signals usually have no problem, so that the wireless signal quality in the current serving cell measured by the terminal is generally good. Therefore, if the current control method of the compressed mode is applied to the inter-frequency switching or inter-system switching triggered by the load balancing, quick switching can not be achieved. Thus the load in the current serving cell can not be reduced in time, which may easily collapse the current serving cell and affecting the normal operation of the terminal service in the current serving cell. Moreover, there is another scenario: for the situation that the operators deploy networks for multiple wireless systems, the operators have different service deployment tendencies for different systems or different frequency points. For instance, the second generation wireless mobile communication system absorbs voice service, and the third generation wireless mobile communication system absorbs the PS domain service. Thus, when the terminal starts an incoming call service from the unexpected system or frequency layer, the radio network controller also performs inter-system switching or inter-frequency switching for this terminal to achieve the object of service deployment. But in order to reduce the influence on the service as much as possible during the inter-system switching or inter-frequency switching, the existing starting strategy of compressed mode can not achieve the effect of quick switching, thus affecting the stability and the system capacity of the service.

Furthermore, for the above situation of the inter-frequency switching or inter-system switching triggered by the load balancing or service balancing mechanism, it is not feasible to use the node B to substitute the terminal to control the compressed mode. The reason is that once the adjacent cell of the current serving cell belongs to other node B, the node B can not obtain or know the situation of the load of the cell belonging to other node B, so that it can not control the start or stop of the compressed mode accurately. And the node B can not learn the service deployment strategy among different systems or different frequency layers either, so that it can not prepare to control the start or stop of the compressed mode.

### Summary of the Invention

In view of this, the main object of the present invention is to provide a control method of compressed mode and system thereof, which can be used in the scene of inter-frequency switching or inter-system switching triggered by load balancing or service balancing, thus reducing the load of the current serving cell in time and ensuring the stability of the terminal service in the cell.

In order to achieve the above object, the technical solution of the present invention is described below.

A control method of compressed mode, comprising:
when a terminal needs inter-frequency measurement or inter-system measurement, a radio network controller notifying a node B to start the compressed mode for the terminal, and then the node B ordering the terminal to start the compressed mode;
after receiving the order from the node B, the terminal returning acknowledgement information to the node B; and
the terminal and the node B generating a plurality of transmission gaps, and the terminal performing the measurement in the plurality of transmission gaps.

The method further comprises: the radio network controller notifying the node B and the terminal of a plurality of transmission gap pattern sequences and identifiers of the plurality of transmission gap pattern sequences in advance; or, the plurality of transmission gap pattern sequences and the identifiers of the plurality of transmission gap pattern sequences being agreed on by the radio network controller, the node B and the terminal in advance.

That the terminal needs inter-frequency measurement or inter-system measurement comprises: the radio network controller determining that the terminal needs inter-frequency measurement or inter-system measurement based on a load balancing principle or a service balancing principle.

The method further comprises:
when the compressed mode needs to be stopped, the radio network controller notifying the node B to stop the compressed mode for the terminal, and then the node B ordering the terminal to stop the compressed mode;
after receiving the order from the node B, the terminal sending acknowledgement information to the node B; and
the terminal and the node B stopping all the plurality of transmission gap pattern sequences.

That the compressed mode needs to be stopped comprises: the radio network controller determining to stop inter-frequency measurement or inter-system measurement for the terminal; or the radio network controller determining to perform inter-frequency switching or inter-system switching operation to the terminal; or if the radio network controller has received the measurement report from the terminal, then the compressed mode needing to be stopped.

The radio network controller notifying the node B to start the compressed mode for the terminal comprises: the radio network controller notifying the node B by sending a compressed mode order of the Node B Application Part (NBAP) protocol layer, wherein the compressed mode order includes: a terminal identifier, an indication for starting the compressed mode, and identifiers of the plurality of transmission gap pattern sequences of the started compressed mode.

The node B ordering the terminal to start the compressed mode comprises: the node B ordering the terminal by sending a High Speed Shared Control Channel (HS-SCCH) order, wherein the HS-SCCH order includes: an indication for starting the compressed mode, and identifiers of the plurality of transmission gap pattern sequences of the started compressed mode; and
the terminal and the node B generating the plurality of transmission gaps comprises: generating the plurality of transmission gaps according to the plurality of transmission gap pattern sequences corresponding to the identifiers of the plurality of transmission gap pattern sequences of the started compressed mode.

The terminal sending the acknowledgement information to the node B comprises: the terminal sending the acknowledgement information to the node B through physical layer High Speed Dedicated Physical Control Channel (HS-DPCCH).

The radio network controller notifying the node B to stop the compressed mode for the terminal comprises: the radio network controller notifying the node B by sending a compressed mode order of NBAP protocol layer, wherein the compressed mode order includes: a terminal identifier and an indication for stopping the compressed mode;
the node B ordering the terminal to stop the compressed mode comprises: the node B ordering the terminal by sending a HS-SCCH order, wherein the HS-SCCH order includes: an indication for stopping the compressed mode; and
the terminal sending the acknowledgement information to the node B comprises: the terminal sending the acknowledgement information to the node B through physical layer HS-DPCCH.

The method further comprises: the radio network controller notifying the node B and the terminal of the repetition times of the plurality of transmission gap pattern sequences;
or, the repetition times of the plurality of transmission gap pattern sequences being agreed on by the radio network controller, the node B and the terminal in advance;
or, the radio network controller notifying the terminal of the repetition times of the plurality of transmission gap pattern sequences, and the compressed mode order further includes the repetition times of the plurality of transmission gap pattern sequences.

A control system of compressed mode, comprising: a radio network controller, a node B and a terminal, wherein
the radio network controller, configured to notify the node B to start the compressed mode for the terminal when the terminal needs inter-frequency measurement or inter-system measurement;
the node B, configured to order the terminal to start the compressed mode after receiving the notification from the radio network controller, and generate a plurality of transmission gaps after receiving acknowledgement information from the terminal; and
the terminal, configured to return the acknowledgement information to the node B after receiving the order from the node B, generate the plurality of transmission gaps, and perform the measurement in the plurality of transmission gaps.

The radio network controller is further configured to notify the node B and the terminal of a plurality of transmission gap pattern sequences and identifiers of the plurality of transmission gap pattern sequences in advance; or to agree with the node B and the terminal on the plurality of transmission gap pattern sequences and the identifiers of the plurality of transmission gap pattern sequences in advance.

The radio network controller is further configured to determine whether the terminal needs inter-frequency measurement or inter-system measurement based on a load balancing principle or a service balancing principle.

The radio network controller is further configured to notify the node B to stop the compressed mode for the terminal when the compressed mode needs to be stopped;
the node B is further configured to order the terminal to stop the compressed mode after receiving the notification from the radio network controller; and to stop all the plurality of transmission gap pattern sequences after receiving the acknowledgement information from the node B; and
the terminal is further configured to send the acknowledgement information to the node B after receiving the order from the node B; and to stop all the plurality of transmission gap pattern sequences.

That the compressed mode needs to de stopped comprises: the radio network controller determining to stop inter-frequency measurement or inter-system measurement for the terminal; or the radio network controller determining to perform inter-frequency switching or inter-system switching operation to the terminal; or if the radio network controller has received the measurement report from the terminal, then the compressed mode needing to be stopped.

The radio network controller notifying the node B to start the compressed mode for the terminal comprises: the radio network controller notifying the node B by sending a compressed mode order of Node B Application Part (NBAP) protocol layer, wherein the compressed mode order includes: a terminal identifier, an indication for starting the compressed mode and identifiers of the plurality of transmission gap pattern sequences of the started compressed mode.

The node B ordering the terminal to start the compressed mode comprises: the node B ordering the terminal by sending a High Speed Shared Control Channel (HS-SCCH) order, wherein the HS-SCCH order includes: an indication for starting the compressed mode, and identifiers of the plurality of transmission gap pattern sequences of the started compressed mode; and
the terminal and the node B generating the plurality of transmission gaps comprises: generating the plurality of transmission gaps according to the plurality of transmission gap pattern sequences corresponding to the identifiers of the plurality of transmission gap pattern sequences of the started compressed mode.

The terminal sending the acknowledgement information to the node B comprises: the terminal sending the acknowledgement information to the node B through physical layer High Speed Dedicated Physical Control Channel (HS-DPCCH).

The radio network controller notifying the node B to stop the compressed mode for the terminal comprises: the radio network controller notifying the node B by sending a compressed mode order of NBAP protocol layer, wherein the compressed mode order includes: a terminal identifier and an indication for stopping the compressed mode;
the node B ordering the terminal to stop the compressed mode comprises: the node B ordering the terminal by sending a HS-SCCH order, wherein the HS-SCCH order includes: an indication for stopping the compressed mode; and
the terminal sending the acknowledgement information to the node B comprises: the terminal sending the acknowledgement information to the node B through physical layer HS-DPCCH.

The radio network controller is further configured to notify the node B and the terminal of the repetition times of the plurality of transmission gap pattern sequences; or, to agree with the node B and the terminal on the repetition times of the plurality of transmission gap pattern sequences in advance;
or,
the radio network controller is further configured to notify the terminal of the repetition times of the plurality of transmission gap pattern sequences in advance; and the compressed mode order sent by the radio network controller to the node B further includes the repetition times of the plurality of transmission gap pattern sequences.

The control method of the compressed mode and system thereof of the present invention are realized by that the radio network controller notifies the node B to start or stop the compressed mode for the designated terminal, and the node B notifies the designated terminal to start or stop the compressed mode after receiving the notification from the radio network controller. In the present invention, controlling the compressed mode of the designated terminal by the node B, which is informed by the radio network controller, resolves the control problem of the compressed mode triggered by the mechanism of load balancing in the case of inter-frequency switching or inter-system switching, and thus reducing the load of the current serving cell in time and ensuring the stability of the terminal service in the cell.

### Brief Description of the Drawings

Fig. 1 is a schematic diagram of the transmission gap pattern sequence structure;
Fig. 2 is a flow chart of the control method of the compressed mode of the present invention;
Fig.3 is a flow chart of the control method of the compressed mode according to Embodiment 1 of the present invention;
Fig.4 is a flow chart of the control method of the compressed mode according to Embodiment 2 of the present invention;
Fig.5 is a flow chart of the control method of the compressed mode according to Embodiment 3 of the present invention;
Fig.6 is a flow chart of the control method of the compressed mode according to Embodiment 4 of the present invention;
Fig.7 is a flow chart of the control method of the compressed mode according to Embodiment 5 of the present invention; and
Fig.8 is a flow chart of the control method of the compressed mode according to Embodiment 6 of the present invention.

### Detailed Description of the Embodiments

The basic thought of the present invention is that: the radio network controller notifies the node B to start or stop the compressed mode for the designated terminal, and then the node B further notifies the designated terminal to start or stop the compressed mode after receiving the notification from the radio network controller.

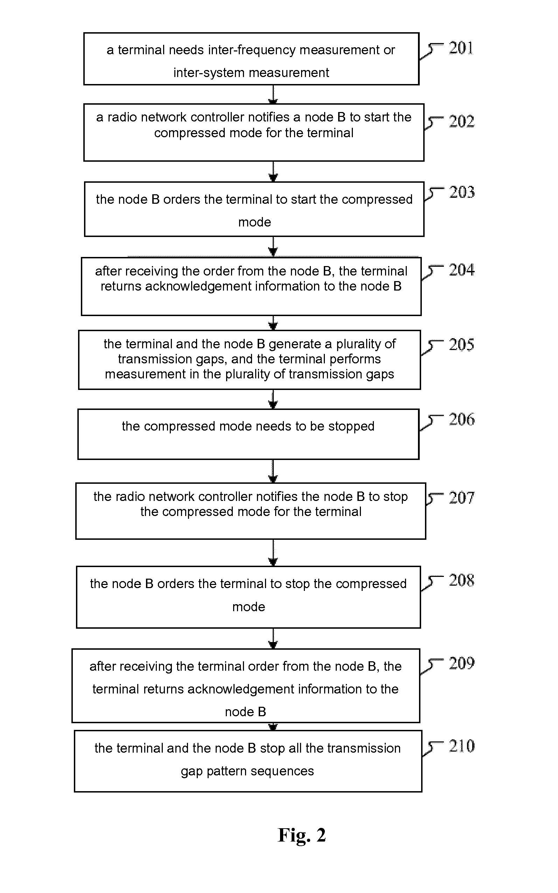

Fig. 2 is a flow chart of the control method of the compressed mode of the present invention. As shown in Fig. 2, the method includes the following steps.

Step 201: a terminal needs inter-frequency measurement or inter-system measurement.

Here, the radio network controller determines whether the terminal needs inter-frequency measurement or inter-system measurement according to the load balancing principle or service balancing principle.

It should be noted that the radio network controller can notify the node B and the terminal of transmission gap pattern sequences and the identifiers of the transmission gap pattern sequences in advance; or, the radio network controller, the node B and the terminal can agree on transmission gap pattern sequences and the identifiers of the transmission gap pattern sequences in advance.

Step 202: the radio network controller notifies the node B to start the compressed mode for the terminal.

Here, the radio network controller notifies the node B by sending the compressed mode order of NBAP protocol layer, wherein the compressed mode order includes: terminal identifier, indication for starting the compressed mode, identifiers of the transmission gap pattern sequences of the started compressed mode. The transmission gap pattern sequences of the started compressed mode can be one set or multiple sets.

Step 203: the node B orders the terminal to start the compressed mode.

Here, the node B orders the terminal by sending a physical layer HS-SCCH order, wherein the HS-SCCH order includes: indication for starting the compressed mode, the identifiers of the transmission gap pattern sequences of the started compressed mode.

Step 204: after receiving the order from the node B, the terminal returns acknowledgement information to the node B.

Here, the terminal sends acknowledgement information to the node B through physical layer HS-DPCCH to confirm receipt of this order.

Step 205: the terminal and the node B generate a plurality of transmission gaps, and the terminal performs measurement in the plurality of transmission gaps.

Here, the terminal and the node B generate a plurality of transmission gaps according to the transmission gap pattern sequences corresponding to the identifiers of the transmission gap pattern sequences (one set or multiple sets) of the started compressed mode.

Step 206: the compressed mode needs to be stopped.

Here, the compressed mode needs to be stopped under the following situations: the radio network controller determines to stop inter-frequency measurement or inter-system measurement for the terminal, or the radio network controller determines to perform inter-frequency switching or inter-system switching operation, or the radio network controller has received the measurement report from the terminal and so on.

Step 207: the radio network controller notifies the node B to stop the compressed mode for the terminal.

Here, the radio network controller notifies the node B by sending the compressed mode order of NBAP protocol layer, wherein the compressed mode order includes: terminal identifier and indication for stopping the compressed mode.

Step 208: the node B orders the terminal to stop the compressed mode.

Here, the node B orders the terminal by sending the physical layer HS-SCCH order, wherein the HS-SCCH order includes: indication for stopping the compressed mode.

Step 209: after receiving the terminal order from the node B, the terminal returns acknowledgement information to the node B.

Here, the terminal returns acknowledgement information to the node B through physical layer HS-DPCCH to confirm receipt of this order.

Step 210: the terminal and the node B stop all the transmission gap pattern sequences.

Further, the present invention provides a control system of compressed mode, comprising: a radio network controller, a node B and a terminal, wherein

the radio network controller is configured to notify the node B to start the compressed mode for the terminal when the terminal needs inter-frequency measurement or inter-system measurement;

the node B is configured to further order the terminal to start the compressed mode after receiving the notification from the radio network controller; and to generate the plurality of transmission gaps after receiving the acknowledgement information from the terminal; and
the terminal is configured to send the acknowledgement information to the node B after receiving the order from the node B; to generate the plurality of transmission gaps, and to perform measurement in the plurality of transmission gaps.

The radio network controller is further configured to notify the node B and the terminal of the transmission gap pattern sequences and the identifiers of the transmission gap pattern sequences in advance; or, to agree on the transmission gap pattern sequences and the identifiers of the transmission gap pattern sequences with the node B and the terminal in advance.

The radio network controller is further configured to determine whether the terminal needs inter-frequency measurement or inter-system measurement according to the load balancing principle or service balancing principle.

The radio network controller is further configured to notify the node B to stop the compressed mode for the terminal when the compressed mode needs to be stopped;
the node B is further configured to further order the terminal to stop the compressed mode after receiving the notification from the radio network controller; and to stop all the transmission gap pattern sequences after receiving the acknowledgement information from the terminal; and
the terminal is further configured to send acknowledgement information to the node B after receiving the order from the node B; and to stop all the transmission gap pattern sequences.

The compressed mode needs to be stopped comprises: the radio network controller determining to stop inter-frequency measurement or inter-system measurement for the terminal; or the radio network controller determining to perform inter-frequency switching or inter-system switching operation for the terminal; or if the radio network controller has received the measurement report from the terminal, then the compressed mode needing to be stopped.

The radio network controller notifies the node B to start the compressed mode to the terminal comprises: the radio network controller notifying the node B by sending the compressed mode order of NBAP protocol layer, wherein the compressed mode order includes: terminal identifier, indication for starting the compressed mode and identifiers of the transmission gap pattern sequences of the started compressed mode.

The node B orders the terminal to start the compressed mode comprises: the node B sending a HS-SCCH order to order the terminal, wherein the HS-SCCH order includes: indication for starting the compressed mode, and identifiers of the transmission gap pattern sequences of the started compressed mode;

The terminal and the node B generate the plurality of transmission gaps comprises: the plurality of transmission gaps being generated according to the transmission gap pattern sequences corresponding to the identifiers of the transmission gap pattern sequences of the started compressed mode.

The terminal returns acknowledgement information to the node B comprises: the terminal returning acknowledgement information to the node B through physical layer HS-DPCCH.

The radio network controller notifies the node B to start the compressed mode to the terminal comprises: the radio network controller notifying the node B by sending the compressed mode order of NBAP protocol layer, the compressed mode order includes: terminal identifier and indication for stopping the compressed mode;
the node B orders the terminal to stop the compressed mode comprises: the node B sending a HS-SCCH order to order the terminal, wherein the HS-SCCH order includes: indication for stopping the compressed mode; and
the terminal sends acknowledgement information to the node B comprises: the terminal sends acknowledgement information to the node B through physical layer HS-DPCCH.

The radio network controller is further configured to notify the node B and the terminal of the repetition times of the transmission gap pattern sequence in advance; or, to agree on the repetition times of the transmission gap pattern sequence with the node B and the terminal in advance;
or,
the radio network controller is further configured to notify the terminal of the repetition times of the transmission gap pattern sequence; and the compressed mode order sent by the radio network controller to the node B also includes the repetition times of the transmission gap pattern sequence.

The implementation of the technique scheme of the present invention will be further illustrated hereinafter in conjunction with the drawings.

### Embodiment 1

In this embodiment, Cell 1, which belongs to Node B1, is congested or overloaded, Node B1 is connected with Radio Network Controller 1 through an IUB interface, and Terminal 1 is located in Cell 1. Radio Network Controller 1 is responsible for the wireless connection of Terminal 1 and Universal Terrestrial The Radio Access Network (UTRAN) (that is to say that the radio network controller is the serving radio network controller of Terminal 1).

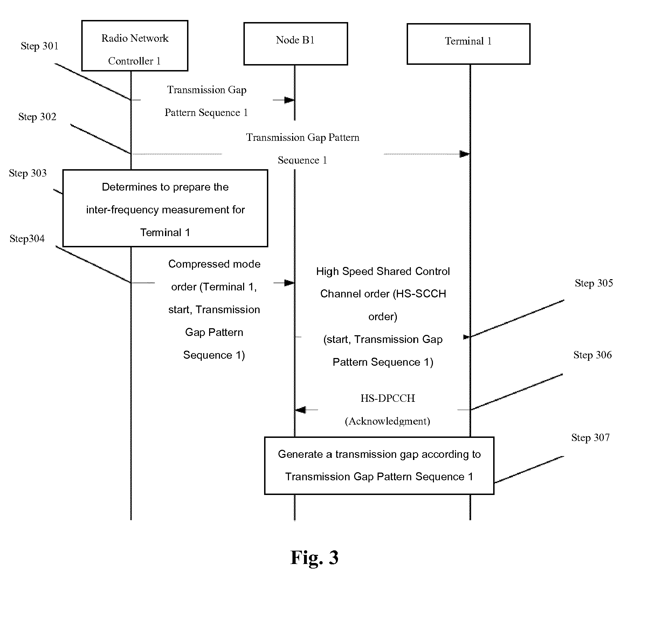

Fig. 3 is a flow chart of the control method of the compressed mode according to Embodiment 1 of the present invention. As shown in Fig. 3, the method comprises the following steps.

Step 301: Radio Network Controller 1 notifies Node B1 of the relevant information of the transmission gap pattern sequence.

Here, the relevant information of the transmission gap pattern sequence includes: a set of transmission gap pattern sequence used for frequency-division duplex measurement and identified by the identifier 1 (it is called Transmission Gap Pattern Sequence 1 hereinafter); and Transmission Gap Pattern Sequence 1 includes two alternate transmission gap patterns: Transmission Gap Pattern 1 and Transmission Gap Pattern 2, each transmission gap pattern provides one transmission gap in one length of the transmission gap pattern, and the repetition times of Transmission Gap Pattern Sequence 1 is 20 times.

Step 302: Radio Network Controller 1 notifies Terminal 1 of the relevant information of the transmission gap pattern sequence.

Here, the content included in the relevant information of the transmission gap pattern sequence is the same as that the in Step 301.

Step 303: Radio Network Controller 1 determines to prepare the inter-frequency measurement to Terminal 1.

Step 304: Radio Network Controller 1 notifies Node B1 to start the compressed mode for Terminal 1.

Here, Radio Network Controller 1 notifies Node B1 by sending the compressed mode order of NBAP protocol layer, wherein the compressed mode order includes: identifier of Terminal 1, indication for starting the compressed mode, identifier of Transmission Gap Pattern Sequence 1.

Step 305: Node B1 orders Terminal 1 to start the compressed mode.

Here, Node B1 orders Terminal 1 by sending a physical layer HS-SCCH order, wherein the HS-SCCH order includes: indication for starting the compressed mode and identifier of Transmission Gap Pattern Sequence 1.

Step 306: Terminal 1 confirms to Node B1 that this order is received.

Here, Terminal 1 returns acknowledgement information to Node B1 through physical layer HS-DPCCH channel to confirm receipt of this order.

Step 307: Terminal 1 and Node B1 generate a transmission gap according to the description of Transmission Gap Pattern Sequence 1, and Terminal 1 is designated to perform the measurement in the plurality of transmission gaps.

### Embodiment 2:

In this embodiment, Cell 1, which belongs to Node B1, is congested or overloaded, Node B1 is connected with Radio Network Controller 1 through an IUB interface, and Terminal 1 is located in Cell 1. Radio Network Controller 1 is responsible for the wireless connection of Terminal 1 and UTRAN (that is to say that the radio network controller is the serving radio network controller of Terminal 1).

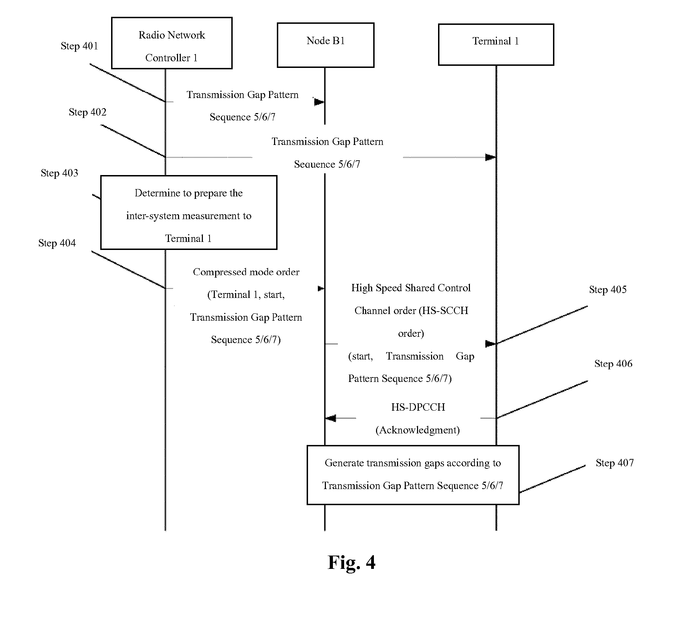

Fig. 4 is a flow chart of the control method of the compressed mode according to Embodiment 2 of the present invention. As shown in Fig. 4, the method comprises the following steps.

Step 401: Radio Network Controller 1 notifies Node B1 of the relevant information of the transmission gap pattern sequences.

Here, the relevant information of the transmission gap pattern sequences includes: three sets of transmission gap pattern sequences, which are respectively: a transmission gap pattern sequence used for GSM Carrier Received Signal Strength Indication measurement with the identifier 5 (it is called Transmission Gap Pattern Sequence 5 hereinafter), a transmission gap pattern sequence used for initial identification of GSM BSIC with the identifier 6 (it is called Transmission Gap Pattern Sequence 6 hereinafter), a transmission gap pattern sequence used for acknowledgement of GSM BSIC with the identifier 7 (it is called Transmission Gap Pattern Sequence 7 hereinafter); and Transmission Gap Pattern Sequence 5, Transmission Gap Pattern Sequence 6, Transmission Gap Pattern Sequence 7 all include two alternate transmission gap patterns, which are Transmission Gap Pattern 1 and Transmission Gap Pattern 2, and each transmission gap pattern provides two transmission gaps in one length of transmission gap pattern.

Step 402: Radio Network Controller 1 notifies Terminal 1 of the relevant information of the transmission gap pattern sequences.

Here, besides the content in Step 401, the relevant information of the transmission gap pattern sequences further includes the repetition times of Transmission Gap Pattern Sequence 5, the repetition times of Transmission Gap Pattern Sequence 6 and the repetition times of Transmission Gap Pattern Sequence 7, all of which are 80 times.

Step 403: Radio Network Controller 1 determines to prepare to perform inter-system measurement for Terminal 1.

Step 404: Radio Network Controller 1 notifies Node B1 to start the compressed mode for the designated Terminal 1.

Here, Radio Network Controller 1 notifies the node B by sending the compressed mode order of the NBAP protocol layer. The compressed mode order includes: identifier of Terminal 1, indication for starting the compressed mode, identifier of Transmission Gap Pattern Sequence 5, identifier of Transmission Gap Pattern Sequence 6, identifier of Transmission Gap Pattern Sequence 7 and the repetition times of Transmission Gap Pattern Sequence 5, the repetition times of Transmission Gap Pattern Sequence 6 and the repetition times of Transmission Gap Pattern Sequence 7, all of which are 80 times.

Step 405: Node B1 orders Terminal 1 to start the compressed mode.

Here, Node B1 orders Terminal 1 by sending physical layer HS-SCCH orders wherein the HS-SCCH order includes: indication for starting the compressed mode and identifier of Transmission Gap Pattern Sequence 5, Transmission Gap Pattern Sequence 6 and Transmission Gap Pattern Sequence 7.

Step 406: Terminal 1 confirms to Node B1 that this order is received.

Here, Terminal 1 returns acknowledgement information to Node B1 through physical layer HS-DPCCH to confirm receipt of this order.

Step 407: Terminal 1 and Node B1 generate transmission gaps according to Transmission Gap Pattern Sequence 5, Transmission Gap Pattern Sequence 6 and Transmission Gap Pattern Sequence 7, and Terminal 1 performs measurement in the transmission gaps.

It can be seen that, the difference between this embodiment and Embodiment 1 is that: in the first step, the radio network controller does not notify the node B of the repetition times of the transmission gap pattern sequences, but notifies the node B when sending the compressed mode order.

### Embodiment 3

In this embodiment, Cell 1, which belongs to Node B1, is congested or overloaded, Node B1 is connected with Radio Network Controller 1 through an IUB interface, and Terminal 1 is located in Cell 1. Radio Network Controller 1 is responsible for the wireless connection of Terminal 1 and UTRAN (that is to say that the radio network controller is the serving wireless network controller of Terminal 1).

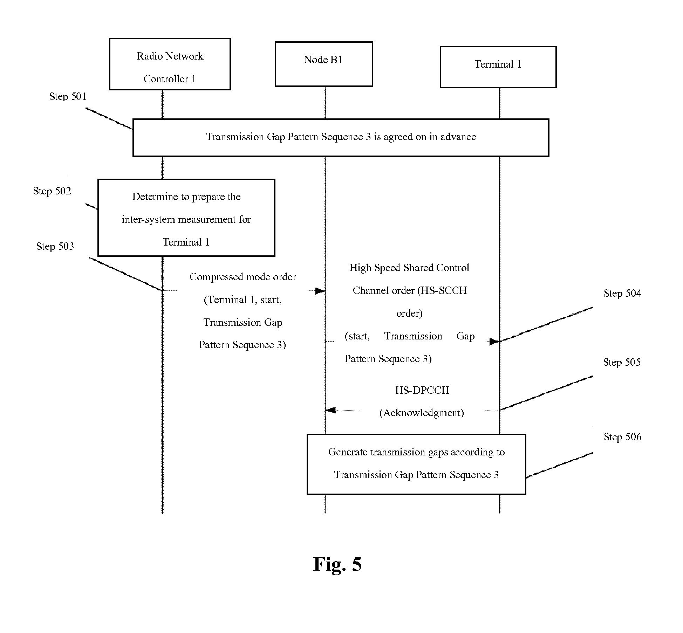

Fig. 5 is a flow chart of the control method of the compressed mode according to Embodiment 3 of the present invention. As shown in Fig. 5, the method comprises the following steps.

Step 501: Radio Network Controller 1, Node B1 and Terminal 1 agree on the relevant information of a transmission gap pattern sequence in advance.

Here, the relevant information of the transmission gap pattern sequence can be: one set of transmission gap pattern sequence, used for time-division duplex measurement and identified by the identifier 3 (it is called Transmission Gap Pattern Sequence 3 hereinafter); and Transmission Gap Pattern Sequence 3 includes two alternate transmission gap pattern sequences, Transmission Gap Pattern Sequence 1 and Transmission Gap Pattern Sequence 2; each transmission gap pattern provides two transmission gaps in one length of transmission gap pattern; and the repetition times of Transmission Gap Pattern Sequence 3 are 16 times.

Step 502: Radio Network Controller 1 determines to prepare to perform inter-system measurement for Terminal 1.

Step 503: Radio Network Controller 1 notifies Node B1 to start the compressed mode for Terminal 1.

Here, Radio Network Controller 1 notifies the node B by sending the compressed mode order of NBAP protocol layer, wherein the compressed mode order includes: identifier of Terminal 1, indication for starting the compressed mode, and identifier of Transmission Gap Pattern Sequence 3.

Step 504: Node B1 orders Terminal 1 to start the compressed mode.

Here, Node B1 orders Terminal 1 by sending a physical layer HS-SCCH order, wherein the HS-SCCH order includes: indication for starting the compressed mode and identifier of Transmission Gap Pattern Sequence 3.

Step 505: Terminal 1 confirms to Node B1 that this order is received.

Here, Terminal 1 returns acknowledgement information to Node B1 through physical layer HS-DPCCH to confirm receipt of this order.

Step 506: Terminal 1 and Node B1 generate transmission gaps according to Transmission Gap Pattern Sequence 3, and Terminal 1 performs the measurement in the transmission gaps.

### Embodiment 4

In this embodiment, Cell 1, which belongs to Node B1, is congested or overloaded, Node B1 is connected with Radio Network Controller 1 through an IUB interface, and Terminal 1 is located in Cell 1. Radio Network Controller 1 is responsible for the wireless connection of Terminal 1 and UTRAN (that is to say that the radio network controller is the serving radio network controller of Terminal 1).

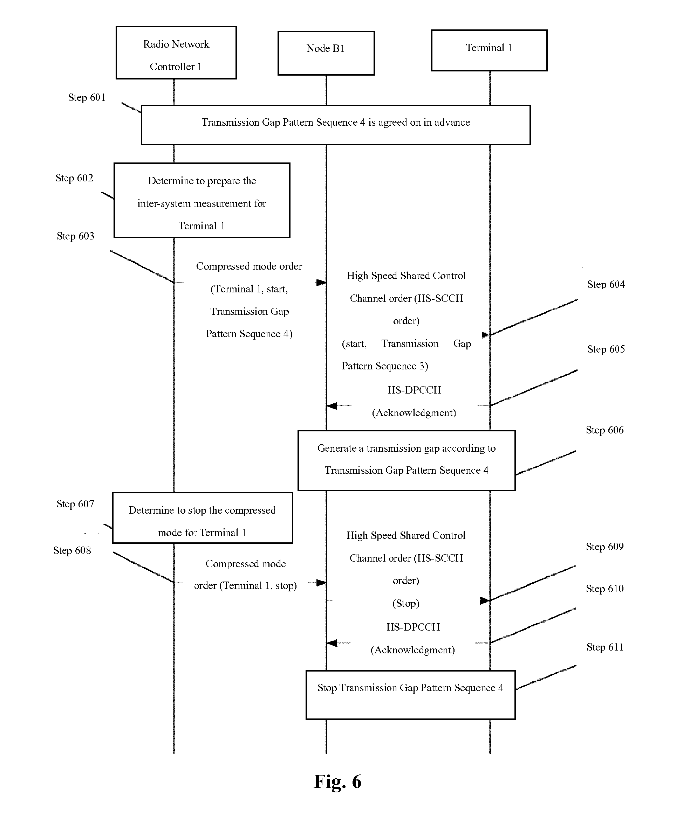

Fig. 6 is a flow chart of the control method of the compressed mode according to Embodiment 4 of the present invention. As shown in Fig. 6, the method comprises the following steps.

Step 601: Radio Network Controller 1, Node B1 and Terminal 1 agree on the relevant information of the transmission gap pattern sequence in advance.

Here, the relevant information of the transmission gap pattern sequence can be: one set of the transmission gap pattern sequence, used for E-UTRA measurement and identified by the identifier 4 (it is called Transmission Gap Pattern Sequence 4 hereinafter); and Transmission Gap Pattern Sequence 4 includes two alternate transmission gap pattern sequences, Transmission Gap Pattern Sequence 1 and Transmission Gap Pattern Sequence 2; each transmission gap pattern provides one transmission gap in one length of transmission gap pattern; and the repetition times of Transmission Gap Pattern Sequence 4 are 8 times.

Step 602: Radio Network Controller 1 determines to prepare to perform inter-system measurement for Terminal 1.

Step 603: Radio Network Controller 1 notifies Node B1 to start the compressed mode for Terminal 1.

Here, Radio Network Controller 1 notifies the node B by sending the compressed mode order of NBAP protocol layer. The compressed mode order includes: identifier of Terminal 1, indication for starting the compressed mode, and identifier of Transmission Gap Pattern Sequence 4.

Step 604: Node B1 orders Terminal 1 to start the compressed mode.

Here, Node B1 orders Terminal 1 by sending a physical layer HS-SCCH order, wherein the HS-SCCH order includes: indication for starting the compressed mode and identifier of Transmission Gap Pattern Sequence 4.

Step 605: Terminal 1 confirms to Node B1 that this order is received.

Here, Terminal 1 returns acknowledgement information to Node B1 through physical layer HS-DPCCH, to confirm receipt of this order.

Step 606: Terminal 1 and Node B1 generate one transmission gap according to Transmission Gap Pattern Sequence 4, and Terminal 1 performs the measurement in the transmission gaps.

Step 607: because Radio Network Controller 1 determines to stop inter-system measurement for Terminal 1, or Radio Network Controller 1 determines to perform inter-system switching to Terminal 1, or Radio Network Controller 1 has received the measurement report from Terminal 1, so that Radio Network Controller 1 determines to stop the compressed mode for Terminal 1.

Step 608: Radio Network Controller 1 notifies Node B1 to stop the compressed mode for Terminal 1.

Here, Radio Network Controller 1 notifies the node B by sending the compressed mode order of NBAP protocol layer, and the compressed mode order includes: identifier of Terminal 1, and indication for stopping the compressed mode.

Step 609: Node B1 orders Terminal 1 to stop the compressed mode.

Here, Node B1 orders Terminal 1 by sending a physical layer HS-SCCH order, wherein the HS-SCCH order includes: indication for stopping the compressed mode.

Step 610: Terminal 1 confirms to Node B1 that this order is received.

Here, Terminal 1 returns acknowledgement information to Node B1 through physical layer HS-DPCCH to confirm receipt of this order.

Step 611: Terminal 1 and Node B1 stop Transmission Gap Pattern Sequence 4.

### Embodiment 5

In this embodiment, Cell 1, which belongs to Node B1, is congested or overloaded, Node B1 is connected with Radio Network Controller 1 through an IUB interface, and Terminal 1 is located in Cell 1. Radio Network Controller 1 is responsible for the wireless connection of Terminal 1 and UTRAN (that is to say that the radio network controller is the serving radio network controller of Terminal 1).

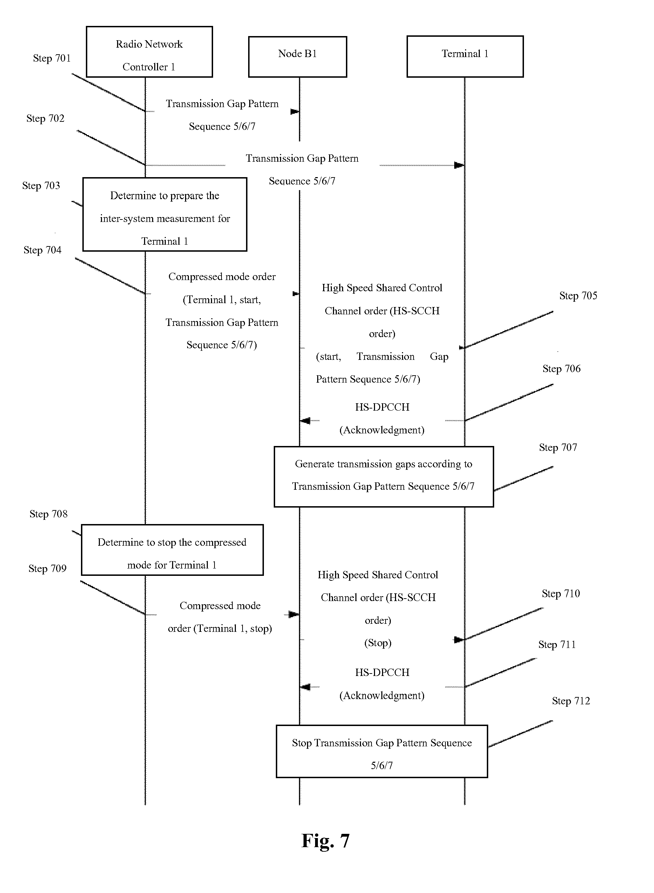

Fig. 7 is a flow chart of the control method of the compressed mode according to Embodiment 5 of the present invention. As shown in Fig. 7, the method comprises the following steps.

Step 701: Radio Network Controller 1 notifies Node B1 of the relevant information of the transmission gap pattern sequence.

Here, the relevant information of the transmission gap pattern sequence includes:
three sets of transmission gap pattern sequences, which are respectively:
   a transmission gap pattern sequence used for GSM Carrier Received Signal Strength Indication (RSSI) measurement with the identifier 5 (it is called Transmission Gap Pattern Sequence 5 hereinafter);
   a transmission gap pattern sequence used for initial identification of GSM BSIC with the identifier 6 (it is called Transmission Gap Pattern Sequence 6 hereinafter);
   a transmission gap pattern sequence used for initial identification of GSM BSIC with the identifier 7 (it is called Transmission Gap Pattern Sequence 7 hereinafter); and
   Transmission Gap Pattern Sequence 5, Transmission Gap Pattern Sequence 6, Transmission Gap Pattern Sequence 7 all include two alternate transmission gap patterns, Transmission Gap Pattern 1 and Transmission Gap Pattern 2, and each transmission gap pattern provides two transmission gaps in one length of the transmission gap pattern.

Step 702: Radio Network Controller 1 notifies Terminal 1 of the relevant information of the transmission gap pattern sequence.

Besides the content in Step 701, the relevant information of the transmission gap pattern sequence in this step further includes the repetition times of Transmission Gap Pattern Sequence 5, the repetition times of Transmission Gap Pattern Sequence 6 and the repetition times of Transmission Gap Pattern Sequence 7, all of which are 80 times.

Step 703: Radio Network Controller 1 determines to prepare to perform inter-system measurement for Terminal 1.

Step 704: Radio Network Controller 1 notifies Node B1 to start the compressed mode for Terminal 1.

Here, Radio Network Controller 1 notifies the node B by sending the compressed mode order of NBAP protocol layer, wherein the compressed mode order includes: identifier of Terminal 1, indication for starting the compressed mode, identifier of Transmission Gap Pattern Sequence 5, identifier of Transmission Gap Pattern Sequence 6 and identifier of Transmission Gap Pattern Sequence 7, and the repetition times of Transmission Gap Pattern Sequence 5, the repetition times of Transmission Gap Pattern Sequence 6 and the repetition times of Transmission Gap Pattern Sequence 7, all of which are 80 times.

Step 705: Node B1 orders Terminal 1 to start the compressed mode.

Here, Node B1 orders Terminal 1 by sending a physical layer HS-SCCH order wherein the HS-SCCH order includes: indication for starting the compressed mode, identifier of Transmission Gap Pattern Sequence 5, identifier of Transmission Gap Pattern Sequence 6 and identifier of Transmission Gap Pattern Sequence 7.

Step 706: Terminal 1 confirms to Node B1 that this order is received.

Here, Terminal 1 returns acknowledgement information to Node B1 through physical layer HS-DPCCH to confirm receipt of this order.

Step 707: Terminal 1 and Node B1 generate transmission gaps according to Transmission Gap Pattern Sequence 5, Transmission Gap Pattern Sequence 6 and Transmission Gap Pattern Sequence 7, and Terminal 1 performs the measurement in the transmission gaps.

Step 708: because Radio Network Controller 1 determines to stop inter-system measurement to Terminal 1, or Radio Network Controller 1 determines to perform inter-system switching to Terminal 1, or Radio Network Controller 1 has received the measurement report from Terminal 1, so that Radio Network Controller 1 determines to stop the compressed mode for Terminal 1.

Step 709: Radio Network Controller 1 notifies Node B1 to stop the compressed mode for Terminal 1.

Here, Radio Network Controller 1 notifies Node B1 by sending the compressed mode order of NBAP protocol layer, wherein the compressed mode order includes: identifier of Terminal 1, and indication for stopping the compressed mode.

Step 710: Node B1 orders Terminal 1 to stop the compressed mode.

Here, Node B1 orders Terminal 1 by sending a physical layer HS-SCCH order, wherein the HS-SCCH order includes: indication for stopping the compressed mode.

Step 711: Terminal 1 confirms to Node B1 that this order is received.

Here, Terminal 1 returns acknowledgement information to Node B1 through physical layer HS-DPCCH to confirm receipt of this order.

Step 712: Terminal 1 and Node B1 stop Transmission Gap Pattern Sequence 5, Transmission Gap Pattern Sequence 6 and Transmission Gap Pattern Sequence 7.

### Embodiment 6

In this embodiment, Cell 1, which belongs to Node B1, is congested or overloaded, Node B1 is connected with Radio Network Controller 1 through an IUB interface, and Terminal 1 is located in Cell 1. The radio network controller 1 is responsible for the wireless connection of Terminal 1 and UTRAN (that is to say that the radio network controller is the serving radio network controller of Terminal 1).

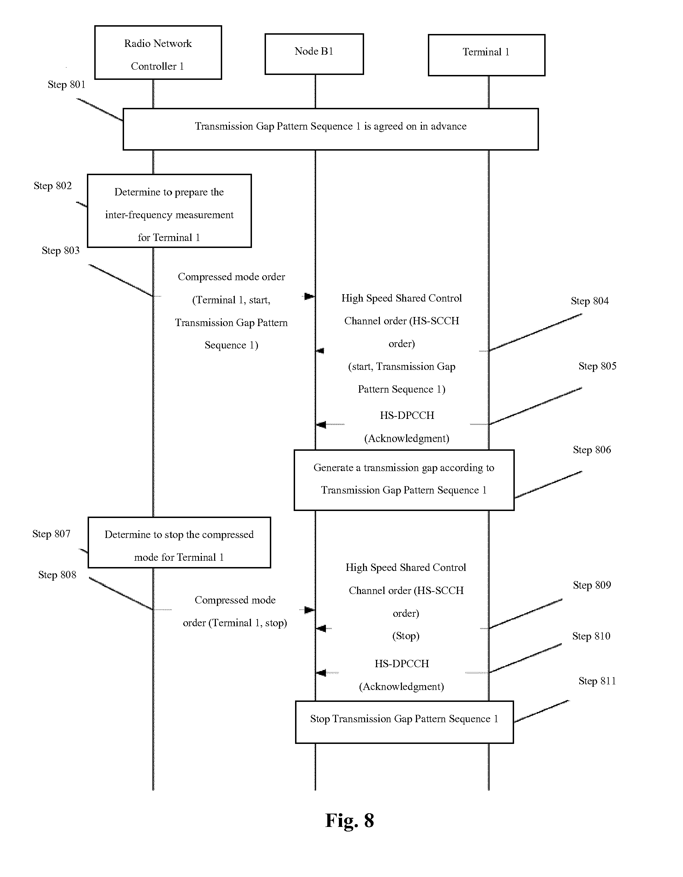

Fig. 8 is a flow chart of the control method of the compressed mode according to Embodiment 6 of the present invention. As shown in Fig. 8, the method comprises the following steps.

Step 801: Radio Network Controller 1, Node B1 and Terminal 1 agree on the relevant information of a transmission gap pattern sequence in advance.

Here, the relevant information of the transmission gap pattern sequence can be: one set of the transmission gap pattern sequence, used for frequency-division duplex measurement and identified by the identifier 1 (it is called Transmission Gap Pattern Sequence 1 hereinafter), and Transmission Gap Pattern Sequence 1 includes two alternate transmission gap pattern sequences, Transmission Gap Pattern Sequence 1 and Transmission Gap Pattern Sequence 2. each transmission gap pattern provides one transmission gap in one length of transmission gap pattern, and the repetition times of Transmission Gap Pattern Sequence 1 are 8 times.

Step 802: Radio Network Controller 1 determines to prepare the inter-frequency measurement to Terminal 1.

Step 803: Radio Network Controller 1 notifies Node B1 to start the compressed mode for Terminal 1.

Here, Radio Network Controller 1 notifies the node B by sending the compressed mode order of NBAP protocol layer. The compressed mode order includes: identifier of Terminal 1, indication for starting the compressed mode, and identifier of Transmission Gap Pattern Sequence 1.

Step 804: Node B1 orders Terminal 1 to start the compressed mode.

Here, Node B1 orders Terminal 1 by sending a physical layer HS-SCCH order.

The HS-SCCH order includes: indication for starting the compressed mode and identifier of Transmission Gap Pattern Sequence 1.

Step 805: Terminal 1 confirms to Node B1 that this order is received.

Here, Terminal 1 returns acknowledgement information to Node B1 through physical layer HS-DPCCH to confirm receipt of this order.

Step 806: Terminal 1 and Node B1 generate one transmission gap according to the transmission gap pattern sequence, and Terminal 1 performs the measurement in the transmission gap.

Step 807: because Radio Network Controller 1 determines to stop inter-frequency measurement for Terminal 1, or Radio Network Controller 1 determines to perform inter-frequency switching operation for Terminal 1, or Radio Network Controller 1 has received the measurement report from Terminal 1, so that Radio Network Controller 1 determines to stop the compressed mode for Terminal 1.

Step 808: Radio Network Controller 1 notifies Node B1 to stop the compressed mode for Terminal 1.

Here, Radio Network Controller 1 notifies Node B1 by sending the compressed mode order of NBAP protocol layer, wherein the compressed mode order includes: identifier of Terminal 1, and indication for stopping the compressed mode.

Step 809: Node B1 orders Terminal 1 to stop the compressed mode.

Here, Node B1 orders Terminal 1 by sending a physical layer HS-SCCH order, wherein the HS-SCCH order includes: indication for stopping the compressed mode.

Step 810: Terminal 1 confirms to Node B1 that this order is received.

Here, Terminal 1 returns acknowledgement information to Node B1 through physical layer HS-DPCCH to confirm receipt of this order.

Step 811: Terminal 1 and Node B1 stop Transmission Gap Pattern Sequence 1.

### Embodiment 7:

In this embodiment, the terminal is balanced to another system according to the service characteristics. Terminal 1 has dialed a conversation service, and thus the radio network controller needs to switch Terminal 1 to the second generation mobile communication system according to the service deployment strategy.

Node B1 is connected with Radio Network Controller 1 through an IUB interface, and Terminal 1 is located in Cell 1. The radio network controller 1 is responsible for the service wireless connection of Terminal 1 and UTRAN (that is to say that the radio network controller is the service radio network controller of Terminal 1). The flow of the control method of the compressed mode of this embodiment is the same as that of Embodiment 2 (referring to Fig. 4). The method comprises the following steps.

Step 1: Radio Network Controller 1 notifies Node B1 of the relevant information of the transmission gap pattern sequences.

Here, the relevant information of the transmission gap pattern sequences includes: three sets of transmission gap pattern sequences, which are respectively: a transmission gap pattern sequence used for Received Signal Strength Indication (GSM) measurement with the identifier 5 (it is called Transmission Gap Pattern Sequence 5 hereinafter); a transmission gap pattern sequence used for initial identification of GSM BSIC with the identifier 6 (it is called Transmission Gap Pattern Sequence 6 hereinafter); a transmission gap pattern sequence used for acknowledgement of GSM BSIC with the identifier 7 (it is called Transmission Gap Pattern Sequence 7 hereinafter); and Transmission Gap Pattern Sequence 5, Transmission Gap Pattern Sequence 6 and Transmission Gap Pattern Sequence 7 all include two alternate transmission gap patterns, Transmission Gap Pattern 1 and Transmission Gap Pattern 2, and each transmission gap pattern provides two transmission gaps in one length of transmission gap pattern.

Step 2: Radio Network Controller 1 notifies Terminal 1 of the relevant information of the transmission gap pattern sequences.

Here, besides the content in Step 1, the relevant information of the transmission gap pattern sequences further includes the repetition times of Transmission Gap Pattern Sequence 5, the repetition times of Transmission Gap Pattern Sequence 6 and the repetition times of Transmission Gap Pattern Sequence 7, all of which are infinite times.

Step 3: Radio Network Controller 1 determines to prepare to perform inter-system measurement for Terminal 1.

Step 4: Radio Network Controller 1 notifies Node B1 to start the compressed mode for the designated Terminal 1.

Here, Radio Network Controller 1 notifies the node B by sending the compressed mode order of the NBAP protocol layer, wherein the compressed mode order includes: identifier of Terminal 1, indication for starting the compressed mode, identifier of Transmission Gap Pattern Sequence 5, identifier of Transmission Gap Pattern Sequence 6 and identifier of Transmission Gap Pattern Sequence 7, and the repetition times of Transmission Gap Pattern Sequence 5, the repetition times of Transmission Gap Pattern Sequence 6 and the repetition times of Transmission Gap Pattern Sequence 7, all of which are infinite times.

Step 5: Node B1 orders Terminal 1 to start the compressed mode.

Here, Node B1 orders Terminal 1 by sending a physical layer HS-SCCH order, wherein the HS-SCCH order includes: indication for starting the compressed mode identifier of Transmission Gap Pattern Sequence 5, identifier of Transmission Gap Pattern Sequence 6 and identifier of Transmission Gap Pattern Sequence 7.

Step 6: Terminal 1 confirms to Node B1 that this order is received.

Here, Terminal 1 returns acknowledgement information to Node B1 through physical layer HS-DPCCH to confirm receipt of this order.

Step 7: Terminal 1 and Node B1 generate transmission gaps according to Transmission Gap Pattern Sequence 5, Transmission Gap Pattern Sequence 6 and Transmission Gap Pattern Sequence 7, and Terminal 1 performs measurement in the transmission gaps.

The description above is just the preferred embodiments of the present invention, and should not be used to limit the protection scope of the present invention.

## Claims

1. A control method of compressed mode, **characterized by** comprising:
when a terminal needs inter-frequency measurement or inter-system measurement, a radio network controller notifying a node B to start the compressed mode for the terminal, and then the node B ordering the terminal to start the compressed mode;
after receiving the order from the node B, the terminal returning acknowledgement information to the node B; and
the terminal and the node B generating a plurality of transmission gaps, and the terminal performing the measurement in the plurality of transmission gaps.

2. The method according to Claim 1, **characterized by** further comprising:
the radio network controller notifying the node B and the terminal of a plurality of transmission gap pattern sequences and identifiers of the plurality of transmission gap pattern sequences in advance; or, the plurality of transmission gap pattern sequences and the identifiers of the plurality of transmission gap pattern sequences being agreed on by the radio network controller, the node B and the terminal in advance.

3. The method according to Claim 1, **characterized in that** the terminal needs inter-frequency measurement or inter-system measurement comprises:
the radio network controller determining that the terminal needs inter-frequency measurement or inter-system measurement based on a load balancing principle or a service balancing principle.

4. The method according to any one of Claims 1 to 3, **characterized by** further comprising:
when the compressed mode needs to be stopped, the radio network controller notifying the node B to stop the compressed mode for the terminal, and then the node B ordering the terminal to stop the compressed mode;
after receiving the order from the node B, the terminal sending acknowledgement information to the node B; and
the terminal and the node B stopping all the plurality of transmission gap pattern sequences.

5. The method according to Claim 4, **characterized in that** the compressed mode needs to be stopped comprises: the radio network controller determining to stop inter-frequency measurement or inter-system measurement for the terminal; or the radio network controller determining to perform inter-frequency switching or inter-system switching operation to the terminal; or if the radio network controller has received the measurement report from the terminal, then the compressed mode needing to be stopped.

6. The method according to Claim 2, **characterized in that**
the radio network controller notifying the node B to start the compressed mode for the terminal comprises: the radio network controller notifying the node B by sending a compressed mode order of the Node B Application Part (NBAP) protocol layer, wherein the compressed mode order includes: a terminal identifier, an indication for starting the compressed mode, and identifiers of the plurality of transmission gap pattern sequences of the started compressed mode.

7. The method according to Claim 6, **characterized in that** the node B ordering the terminal to start the compressed mode comprises: the node B ordering the terminal by sending a High Speed Shared Control Channel (HS-SCCH) order, wherein the HS-SCCH order includes: an indication for starting the compressed mode, and identifiers of the plurality of transmission gap pattern sequences of the started compressed mode; and
the terminal and the node B generating the plurality of transmission gaps comprises: generating the plurality of transmission gaps according to the plurality of transmission gap pattern sequences corresponding to the identifiers of the plurality of transmission gap pattern sequences of the started compressed mode.

8. The method according to Claim 6, **characterized in that** the terminal sending the acknowledgement information to the node B comprises: the terminal sending the acknowledgement information to the node B through physical layer High Speed Dedicated Physical Control Channel (HS-DPCCH).

9. The method according to Claim 4, **characterized in that**
the radio network controller notifying the node B to stop the compressed mode for the terminal comprises: the radio network controller notifying the node B by sending a compressed mode order of NBAP protocol layer, wherein the compressed mode order includes: a terminal identifier and an indication for stopping the compressed mode;
the node B ordering the terminal to stop the compressed mode comprises: the node B ordering the terminal by sending a HS-SCCH order, wherein the HS-SCCH order includes: an indication for stopping the compressed mode; and
the terminal sending the acknowledgement information to the node B comprises: the terminal sending the acknowledgement information to the node B through physical layer HS-DPCCH.

10. The method according to Claim 6, **characterized by** further comprising: the radio network controller notifying the node B and the terminal of repetition times of the plurality of transmission gap pattern sequences;
or, repetition times of the plurality of transmission gap pattern sequences being agreed on by the radio network controller, the node B and the terminal in advance;
or, the radio network controller notifying the terminal of repetition times of the plurality of transmission gap pattern sequences, and the compressed mode order further includes the repetition times of the plurality of transmission gap pattern sequences.

11. A control system of compressed mode, **characterized by** comprising: a radio network controller, a node B and a terminal, wherein
the radio network controller, configured to notify the node B to start the compressed mode for the terminal when the terminal needs inter-frequency measurement or inter-system measurement;
the node B, configured to order the terminal to start the compressed mode after receiving the notification from the radio network controller, and generate a plurality of transmission gaps after receiving acknowledgement information from the terminal; and
the terminal, configured to return the acknowledgement information to the node B after receiving the order from the node B, generate the plurality of transmission gaps, and perform the measurement in the plurality of transmission gaps.

12. The system according to Claim 11, **characterized in that**
the radio network controller is further configured to notify the node B and the terminal of a plurality of transmission gap pattern sequences and identifiers of the plurality of transmission gap pattern sequences in advance; or to agree with the node B and the terminal on the plurality of transmission gap pattern sequences and the identifiers of the plurality of transmission gap pattern sequences in advance.

13. The system according to Claim 11, **characterized in that**
the radio network controller is further configured to determine whether the terminal needs inter-frequency measurement or inter-system measurement based on a load balancing principle or a service balancing principle.

14. The system according to any one of Claims 11 to 13, **characterized in that**
the radio network controller is further configured to notify the node B to stop the compressed mode for the terminal when the compressed mode needs to be stopped;
the node B is further configured to order the terminal to stop the compressed mode after receiving the notification from the radio network controller; and to stop all the plurality of transmission gap pattern sequences after receiving the acknowledgement information from the node B; and
the terminal is further configured to send the acknowledgement information to the node B after receiving the order from the node B; and to stop all the plurality of transmission gap pattern sequences.

15. The system according to Claim 14, **characterized in that**
that the compressed mode needs to be stopped comprises: the radio network controller determining to stop inter-frequency measurement or inter-system measurement for the terminal; or the radio network controller determining to perform inter-frequency switching or inter-system switching operation to the terminal; or if the radio network controller has received the measurement report from the terminal, then the compressed mode needing to be stopped.

16. The system according to Claim 12, **characterized in that**
the radio network controller notifying the node B to start the compressed mode for the terminal comprises: the radio network controller notifying the node B by sending a compressed mode order of Node B Application Part (NBAP) protocol layer, wherein the compressed mode order includes: a terminal identifier, an indication for starting the compressed mode and identifiers of the plurality of transmission gap pattern sequences of the started compressed mode.

17. The system according to Claim 16, **characterized in that** the node B ordering the terminal to start the compressed mode comprises: the node B ordering the terminal by sending a High Speed Shared Control Channel (HS-SCCH) order, wherein the HS-SCCH order includes: an indication for starting the compressed mode, and identifiers of the plurality of transmission gap pattern sequences of the started compressed mode; and
the terminal and the node B generating the plurality of transmission gaps comprises: generating the plurality of transmission gaps according to the plurality of transmission gap pattern sequences corresponding to the identifiers of the plurality of transmission gap pattern sequences of the started compressed mode.

18. The system according to Claim 16, **characterized in that**
the terminal sending the acknowledgement information to the node B comprises: the terminal sending the acknowledgement information to the node B through physical layer High Speed Dedicated Physical Control Channel (HS-DPCCH).

19. The system according to Claim 14, **characterized in that**
the radio network controller notifying the node B to stop the compressed mode for the terminal comprises: the radio network controller notifying the node B by sending a compressed mode order of NBAP protocol layer, wherein the compressed mode order includes: a terminal identifier and an indication for stopping the compressed mode;
the node B ordering the terminal to stop the compressed mode comprises: the node B ordering the terminal by sending a HS-SCCH order, wherein the HS-SCCH order includes: an indication for stopping the compressed mode; and
the terminal sending the acknowledgement information to the node B comprises: the terminal sending the acknowledgement information to the node B through physical layer HS-DPCCH.

20. The system according to Claim 16, **characterized in that**
the radio network controller is further configured to notify the node B and the terminal of repetition times of the plurality of transmission gap pattern sequences; or, to agree with the node B and the terminal on repetition times of the plurality of transmission gap pattern sequences in advance;
or,
the radio network controller is further configured to notify the terminal of repetition times of the plurality of transmission gap pattern sequences in advance; and the compressed mode order sent by the radio network controller to the node B further includes the repetition times of the plurality of transmission gap pattern sequences.
